# EUROPEAN PATENT SPECIFICATION

(11) **EP 1 643 177 B1**
(45) Date of publication and mention of the grant of the patent: **10.03.2010**
(21) Application number: 05010938.8
(22) Date of filing: 20.05.2005
(51) Int. Cl.: H02G 3/04, F16L 3/26

(54) **Raceway contruction for cables, pipes and the like**
Kanalkonstruktion für Kabeln, Rohre und dergleichen
Canalisation pour des câbles, tuyaux et analogues

(30) Priority: 01.10.2004 IT MI20040450 U
(43) Date of publication of application: 05.04.2006
(73) Proprietor: COMELTI S.R.L., 20037 Paderno Dugnano MI (IT)
(72) Inventor: Villi, Piergiorgio, 20051 Limbiate MILANO (IT)
(74) Representative: Cicogna, Franco

(56) References cited:
- EP-A- 0 654 878
- EP-A- 0 767 521
- EP-A- 1 162 709
- EP-A- 1 388 917
- GB-A- 2 132 421
- US-A- 4 640 314

## Description

The present invention relates to a raceway construction, specifically adapted to hold cables, pipes and the like therein.

Raceway constructions, or "channels", made of plastics materials and used in the electric field, has cable supporting constructions, and in the thermo-hydraulic field for allowing conditioning, condensate discharging and so on pipes to pass therethrough are already commercially known.

Many of the above mentioned raceway or channel constructions comprise a crowned cover, and have the drawback that they, if subjected to a compression from the top, allow the cover to be lowered, because of the flexibility of the latter and of the raceway walls, thereby the cover is disengaged and the contents of the raceway are ejected.

The patent document US 4640314 discloses a raceway construction according to the preamble of claim 1.

### SUMMARY OF THE INVENTION

Accordingly, the aim of the present invention is to provide such a raceway construction including a crowned or convex cover, allowing the prior art drawbacks to be simply and inexpensively eliminated.

Within the scope of the above mentioned aim, a main object of the invention is to provide such a raceway construction which, even if it is compressed from the top, prevents the cover from being disengaged.

Yet another object of the present invention is to provide such a raceway construction which is very reliable and safe in operation.

Yet another object of the present invention is to provide such a raceway construction which can be installed and/or assembled in a very easy and quick manner.

These objects are achieved by a raceway construction according to claim 1.

### BRIEF DESCRIPTION OF THE DRAWINGS

Further characteristics and advantages of the present invention will become more apparent hereinafter from the following detailed disclosure of a preferred, though not exclusive, embodiment of the invention, which is illustrated, by way of an indicative but not limitative example, in the accompanying drawings, where:

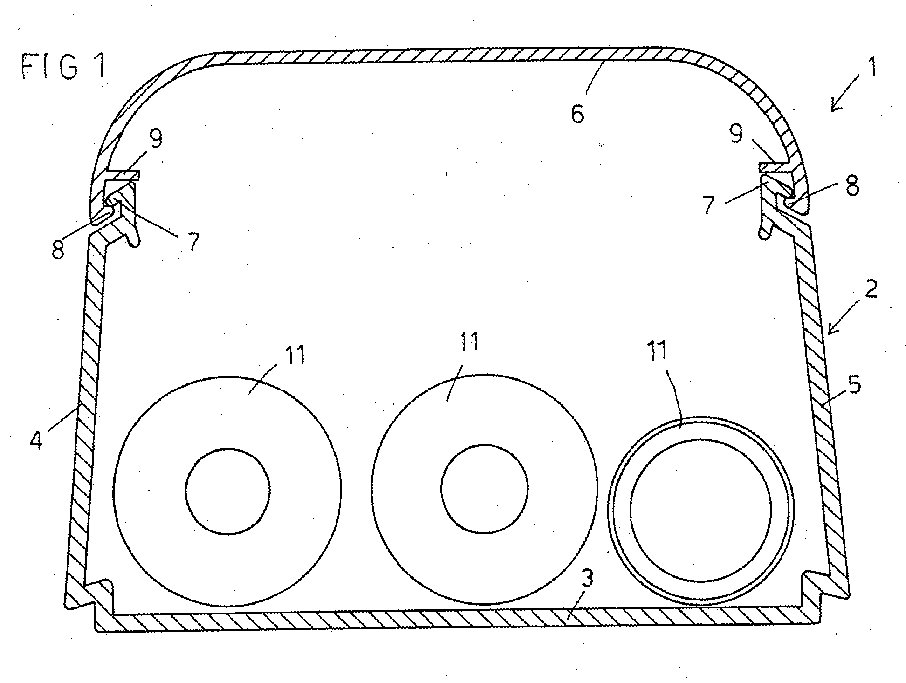

Figure 1 is cross-section view of a raceway construction according to the invention; and
Figure 2 is a view similar to figure 1 which illustrates the raceway construction according to the invention including a double lug.

### DESCRIPTION OF THE PREFERRED EMBODIMENT

With reference to the number references of the above mentioned figures, the raceway construction according to the present invention, which has been generally indicated by the reference number 1, comprises a section member 2 including a bottom wall 3 and two sidewalls 4 and 5.

The section member 2 can be closed by a cover 6, through latching or hook means.

Said hook means comprise a longitudinal hook 7, formed as a single piece along the edge of each wall 4 and 5 of the section member, and adapted to snap engage with a projecting edge 8 formed on each side of the cover 6.

According to the invention, at each projecting edge 8, is formed a lug or wing 9, arranged inside the cover and adapted to interfere against the longitudinal hook 7, as the cover is latched to the section member, to prevent said cover from being accidentally disengaged.

In fact, said lug 9 prevents the longitudinal hook 7 from being displaced in a cross direction, as is clearly shown in the figures.

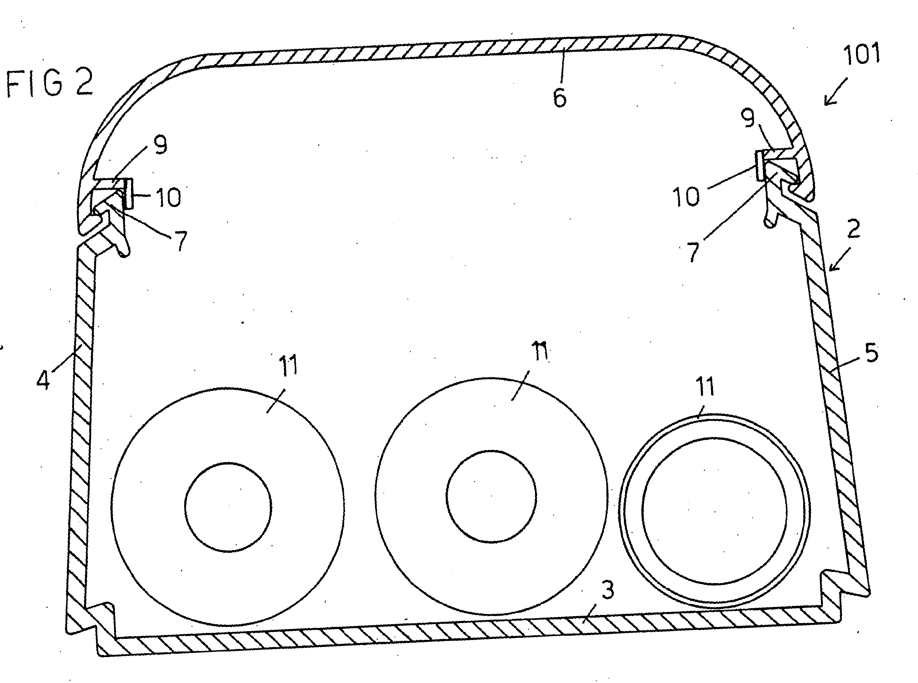

Figure 2 shows a raceway construction 101 which is substantially analogous to the above disclosed raceway construction 1, but including a double lug.

More specifically, to said lug 9 is applied, preferably as a single body, a second lug 10, arranged substantially with a perpendicular direction with respect to the first lug 9 and adapted to encompass the hook 7.

The operation of the raceway construction according to the invention is substantially similar to that of a prior raceway construction and provides that the section member 2 is assembled to a wall or other supporting surface by clamping systems of a per se known type, and the engagement of the cables or tubes 11 in the section member, as well as the snap closing of the cover 6 on the section member 2.

It has been found that the invention fully achieves the intended aim and objects.

In fact, the invention provides a raceway construction which, by simple and inexpensive means, prevents the cover from being accidentally disengaged.

The modification brought to the cover, comprising the lug or wing 9 and 10, operates against any pressing force, thereby preventing an undesired flexure of the section member walls, and preventing the cover from being disengaged.

In this connection it should be pointed out that, anyhow, the cover can be disengaged, if it is desired, by forcibly deforming it.

In practicing the invention, the used materials, as well as the contingent size and shapes can be any, depending on requirements.

## Claims

1. A raceway construction (1), particularly adapted to hold cables, pipes and the like therein, comprising a section member (2) and a convex cover (6), the section member (2) including a bottom wall (3) and two sidewalls (4, 5) which can be closed by said convex cover (6), said sidewalls (4, 5) comprising each a longitudinal top hook (7) formed as a single piece along the top edge of each said wall (4, 5), said longitudinal top hook (7) being adapted to removably snap engage a respective inward projecting horizontal edge of a corresponding end bottom hook (8) formed at each bottom end of said cover (6), **characterized in that** above each said projecting edge of said cover is formed, integrally with said cover (6) and on the inner surface of said cover, an inward extending horizontal lug (9) adapted to abut, as said cover is latched to said section member, against a top portion of said longitudinal hook of said wall (4, 5), thereby preventing said cover (6) from being accidentally disengaged from said wall (4, 5) if a pressure force is applied on said cover (6).

2. A raceway construction, according to claim 1, **characterized in that** said raceway construction comprises moreover a vertical lug (10) integral with said horizontal lug (9), and downward vertically substantially perpendicular extending from said horizontal lug, thereby encompassing said longitudinal top hook of each said wall (4, 5), thereby preventing said cover (6) from being accidentally disengaged from said walls (4, 5) if a pressure force is applied to said walls (4, 5).

## Patentansprüche

1. Kanalkonstruktion (1), insbesondere geeignet, um Kabel, Rohre und dergleichen darin aufzunehmen, umfassend ein Profilelement (2) und eine konvexe Abdeckung (6), wobei das Profilelement (2) eine Bodenwand (3) und zwei Seitenwände (4, 5) umfasst, welche durch die konvexe Abdeckung (6) geschlossen werden können, die Seitenwände (4, 5) jeweils einen oberen Längshaken (7) umfassen, der entlang der Oberkante jeder Wand (4, 5) als ein Stück ausgebildet ist, und der obere Längshaken (7) so ausgelegt ist, dass er mit einer jeweiligen nach innen vorstehenden horizontalen Kante eines entsprechenden unteren Endhakens (8), der an jedem unteren Ende der Abdeckung (6) ausgebildet ist, lösbar in Eingriff steht, **dadurch gekennzeichnet, dass** über der vorstehenden Kante der Abdeckung einstückig mit der Abdeckung (6) und auf der Innenfläche der Abdeckung eine sich nach innen erstreckende horizontale Lasche (9) ausgebildet ist, die so ausgelegt ist, dass sie gegen einen oberen Abschnitt des Längshakens der Wand (4, 5) stößt, wenn die Abdeckung mit dem Profilelement verriegelt wird, um dadurch zu verhindern, dass die Abdeckung (6) versehentlich von der Wand (4, 5) gelöst wird, wenn eine Druckkraft auf die Abdeckung (6) ausgeübt wird.

2. Kanalkonstruktion nach Anspruch 1, **dadurch gekennzeichnet, dass** die Kanalkonstruktion außerdem eine vertikale Lasche (10) umfasst, die einstückig mit der horizontalen Lasche (9) ausgebildet ist und sich von der horizontalen Lasche im Wesentlichen senkrecht vertikal nach unten erstreckt, um dadurch den oberen Längshaken jeder Wand (4, 5) zu umgeben, um dadurch zu verhindern, dass die Abdeckung (6) versehentlich von den Wänden (4, 5) gelöst wird, wenn eine Druckkraft auf die Wände (4, 5) ausgeübt wird.

## Revendications

1. Canalisation (1) particulièrement conçue pour contenir des câbles, des tuyaux et similaires, comprenant un élément de profilé (2) et un couvercle convexe (6), l'élément de profilé (2) comportant une paroi inférieure (3) et deux parois latérales (4, 5) qui peuvent être refermées par ledit couvercle convexe (6), lesdites parois latérales (4, 5) comprenant chacune un crochet supérieur longitudinal (7) formé en une seule pièce le long du bord supérieur de chaque dite paroi (4, 5), ledit crochet supérieur longitudinal (7) étant conçu pour s'engager par encliquètement de manière détachable sur un bord horizontal en saillie vers l'intérieur respectif d'un crochet inférieur d'extrémité correspondante (8) formé au niveau de chaque extrémité inférieure dudit couvercle (6), **caractérisé en ce que**, au-dessus de chaque dit bord en saillie dudit couvercle est formée, solidairement avec ledit couvercle (6) et sur la surface intérieure dudit couvercle, une patte horizontale s'étendant à l'intérieur (9) conçue pour buter, lorsque ledit couvercle est verrouillé, sur ledit élément de profilé, contre une partie supérieure dudit crochet longitudinal de ladite paroi (4, 5), en empêchant ainsi ledit couvercle (6) d'être dégagé accidentellement de ladite paroi (4, 5) si une force de pression est appliquée sur ledit couvercle (6).

2. Canalisation selon la revendication 1, **caractérisée en ce que** ladite canalisation comprend de plus une patte verticale (10) solidaire de ladite patte horizontale (9), et s'étendant sensiblement perpendiculairement verticalement vers le bas à partir de ladite patte horizontale, en entourant ainsi ledit crochet supérieur longitudinal de chaque dite paroi (4, 5), ce qui empêche ainsi ledit couvercle (6) d'être accidentellement dégagé desdites parois (4, 5) si une force de pression est appliquée sur lesdites parois (4, 5).
